(19) Europäisches Patentamt
European Patent Office
Office européen des brevets

(11) EP 1 801 162 B1

(12) **EUROPÄISCHE PATENTSCHRIFT**

(45) Veröffentlichungstag und Bekanntmachung des Hinweises auf die Patenterteilung:
**09.07.2008 Patentblatt 2008/28**

(51) Int Cl.:
***C08L 77/00*** *(2006.01)* ***C08L 77/02*** *(2006.01)*
***C08L 77/06*** *(2006.01)* ***C08L 51/08*** *(2006.01)*

(21) Anmeldenummer: **05028288.8**

(22) Anmeldetag: **23.12.2005**

(54) **Polyamid-EVA Mischungen**

Polyamid-eva-blends

Mélanges à base de polyamide et d'EVA

(84) Benannte Vertragsstaaten:
**DE FR GB IT**

(43) Veröffentlichungstag der Anmeldung:
**27.06.2007 Patentblatt 2007/26**

(73) Patentinhaber:
- **EMS-CHEMIE AG**
  **7013 Domat/Ems (CH)**
- **NORMA Germany GmbH**
  **63277 Maintal (DE)**

(72) Erfinder:
- **Hoffmann, Botho**
  **7013 Domat/Ems (CH)**
- **Stöppelmann, Georg**
  **7402 Bonaduz (CH)**
- **Kertesz, Janos**
  **65719 Hofheim (CH)**
- **Fritz, Hans-Gerhard**
  **73066 Uhingen (DE)**
- **Jin, Fan**
  **70569 Stuttgart (DE)**

(74) Vertreter: **Pfenning, Meinig & Partner GbR**
**Patent- und Rechtsanwälte**
**Theresienhöhe 13**
**80339 München (DE)**

(56) Entgegenhaltungen:
**EP-A- 0 469 693**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 1 801 162 B1

Printed by Jouve, 75001 PARIS (FR)

## Beschreibung

Die Erfindung betrifft eine Formmasse umfassend eine thermoplastische Matrix und eine an die thermoplastische Matrix angebundene vernetzte, disperse Elastomerphase, wobei die vernetzte Elastomerphase EthylenCopolymere sowie einen Verträglichkeitsvermittler auf Basis von gepfropften Ethylen-Copolymeren umfasst. Die Erfindung betrifft weiterhin ein Verfahren zur Herstellung einer derartigen Formmasse.

Thermoplastische Formmassen, die aus einer thermoplastischen Matrix und einer dispersen Elastomerphase bestehen, sind im Stand der Technik bekannt. Die Eigenschaften dieser Materialklassen werden insbesondere durch die disperse Elastomerphase bestimmt.

So wird in der DE 103 45 043 A1 eine Mikrogel enthaltende Zusammensetzung beschrieben, die aus einer thermoplastischen Phase, d.h. aus einer thermoplastischen Werkstoff und vernetzten Mikrogelen als disperse Phase besteht, wobei diese Mikrogele nicht durch Einwirkung von Strahlung vernetzt worden sind. Die Vernetzung der Mikrogele erfolgt dabei vor der Einarbeitung in die Matrix. Bei der DE 103 45 043 A1 wird somit durch das Einarbeiten von Mikrogelen in die thermoplastischen Werkstoffe eine thermoplastische Elastomerzusammensetzung erhalten, bei der die Morphologieeinstellungen der dispergierten Phase räumlich und zeitlich von der Herstellung des Materials entkoppelt ist.

Weiterhin ist in der EP 0 469 693 A2 eine schlagzähe Polyamidformmasse offenbart, die aus einer thermoplastischen Matrix, nämlich teilkristallinem Polyamid und Ethylencopolymeren als disperse Phase aufgebaut sind. Eine Vernetzung der dispersen Elastomerphase wird dabei nicht angesprochen.

Es hat sich jedoch nun aber gezeigt, dass die im Stand der Technik beschriebenen thermoplastischen Formmassen in Bezug auf ihre physikalischen Eigenschaften, insbesondere in Bezug auf die Chemikalienbeständigkeit, hier insbesondere in Bezug auf eine möglichst kleine Ölquellung, noch keine ausreichenden Ergebnisse aufweisen. Eine möglichst kleine Ölquellung ist für viele Anwendungsfälle, insbesondere im Bereich von Kraftfahrzeugen, bei öl- oder benzinführenden Systemen wichtig.

Ausgehend hiervon ist es die Aufgabe der vorliegenden Erfindung, neuartige thermoplastische Formmassen vorzuschlagen, wobei die Formmassen insbesondere in ihren physikalischen Eigenschaften, insbesondere in Bezug auf die Ölquellung gegenüber den im Stand der Technik bekannten Formmassen überlegene Eigenschaften aufweisen. Weiterhin ist es eine Aufgabe der vorliegenden Erfindung, ein entsprechendes Herstellungsverfahren anzugeben.

Die Aufgabe wird in Bezug auf die Formmasse durch die Merkmale des Patentanspruchs 1 und bezüglich das Verfahren zur Herstellung durch die Merkmale des Patentanspruchs 14 gelöst. Die Unteransprüche zeigen vorteilhafte Weiterbildungen auf.

Die erfindungsgemäße Formmasse zeichnet sich somit dadurch aus, dass diese eine an die thermoplastische Matrix angebundene vernetzte disperse Elastomerphase aufweist. Wesentlich bei der vorliegenden Erfindung ist dabei, dass die vernetzte disperse Elastomerphase aus 10 bis 69 Gew.-% eines Ethylencopolymeren sowie 1 bis 10 Gew.-% eines Verträglichkeitsvermittlers, ausgewählt aus den mittels Pfropfung von $\alpha$, $\beta$, ethylenisch ungesättigten Mono- und/oder Dicarbonsäuren bzw. deren Derivate auf ein Ethylen-Copolymer-Polymerrückgrat erhaltenen Verbindungen enthält. Wesentliche Bedeutung kommt dabei dem Verträglichkeitsvermittler in den angegebenen Gewichtsmengen, die sich jeweils auf die Formmasse beziehen, zu.

Die Konzentration des Polyamids beträgt dabei 30 bis 80 Gew.-%, bevorzugt 40 bis 60 Gew.-% und besonders bevorzugt 45 bis 55 Gew.-%.

Es hat sich nun gezeigt, dass eine Formmasse, die wie eine vorstehend beschriebene angebundene vernetzte disperse Elastomerphase aufweist, sich in ihren physikalischen Eigenschaften insbesondere in Bezug auf die Ölquellung deutlich gegenüber denen, die bisher im Stand der Technik bekannt sind, überlegen zeigt. Überraschend ist dabei weiterhin, dass die weiteren physikalischen Eigenschaften der erfindungsgemäßen Formmasse, wie Schlagzähigkeit, Bruchspannung, E-Modul und Bruchdehnung dadurch nicht ungünstig beeinflusst werden.

Bei der erfindungsgemäßen Formmasse ist es dabei wesentlich, dass die angegebenen Gewichtsverhältnisse in Bezug auf den Verträglichkeitsvermittler eingehalten werden. Zu hohe Mengen, d.h. Mengen über 10 %, führen offensichtlich zu einer Vernetzung der Polyamidphase, infolgedessen die disperse Elastomerphase größere Partikel aufweist, was zu einer Steigerung der Ölquellung führt. Kleinere Mengen, d.h. Mengen unter 1 Gew.-%, führen ebenfalls zu unbefriedigenden Ergebnissen. Bevorzugt ist es deshalb bei der erfindungsgemäßen Formmasse, wenn der Verträglichkeitsvermittler in einer Menge von 1 bis 7 Gew.-%, besonders bevorzugt in einer Menge von 1 bis 5 Gew.-% eingesetzt wird.

Im Polyamid-Elastomer-Blend liegen Teile des Verträglichkeitsvermittlers sowohl in der dispersen Elastomerphase als auch in der kontinuierlichen Polyamidphase vor. In beiden Phasen findet unabhängig voneinander eine chemische Ankopplung statt. In der Elastomerphase findet die Ankopplung im Rahmen der radikalischen Vernetzung statt, während in der Polyamidphase die aufgepfropften funktionellen Gruppen des Verträglichkeitsvermittlers mit den Polyamidendgruppen reagieren. Darüber hinaus reagieren auch die an der Oberfläche der dispersen Phase vorhandenen funktionellen Gruppen des Verträglichkeitsvermittlers mit den Endgruppen der Polyamidmatrix. Die letztgenannte Reaktion sorgt für eine gute Anbindung der beiden Phasen, die für die Generierung der gewünschten Eigenschaften

erforderlich ist.

Wenn bei der erfindungsgemäßen Formmasse, wie vorstehend beschrieben, die angegebenen Gewichtsmengen in Bezug auf den Verträglichkeitsvermittler eingehalten werden, wird für die dispergierte Phase ein einheitlicher Partikeldurchmesser erreicht, der im Bereich von 0,2 bis 3 $\mu$m liegt. Die überlegenen Eigenschaften der erfindungsgemäßen Formmasse sind offensichtlich insbesondere auf diese einheitliche Partikelgrößenverteilung der dispersen Phase im angegebenen Bereich von 0,2 bis 3 $\mu$m, bevorzugt im Bereich zwischen 0,5 $\mu$m bis 3 $\mu$m zurückzuführen. Die Steuerung der Partikelgröße erfolgt dabei in stofflicher Hinsicht, wie vorstehend ausgeführt, durch die zugegebene Menge an Verträglichkeitsvermittlern.

Desweiteren wird die Partikelgröße durch die Verfahrensparameter und, wie im folgenden berichtet, durch die rheologischen Verhältnisse bei der Blendherstellung beeinflusst.

Bezüglich der Einstellung der Morphologie kommt dabei weiterhin dem Viskositätsverhältnis Polyamid / Elastomer eine hohe Bedeutung zu. Wichtig ist dabei die Größe des charakteristischen Verhältnisses $\lambda_3/\lambda_1$:
mit

$$\lambda_3 = \Phi_{DP}/\Phi_{CP}$$

und

$$\lambda_1 = \eta_{DP}/\eta_{CP}$$

Wobei $\lambda_3$ das Volumenkonzentrationsverhältnis und $\lambda_1$ das Verhältnis der komplexen Viskositäten darstellt. DP steht für die disperse (Elastomer), und CP für die kontinuierliche Phase (Polyamid).

Stehen die Viskositäten von Polyamid und Ethylen-Copolymer im richtigen Verhältnis, kann durch geeignete Wahl des Schneckenkonzeptes mit Mischelementen und Knetblöcken eine repräsentative Schergeschwindigkeit gefunden werden, die eine hinreichende Dispergierung der Elastomerphase unter den gegebenen Umständen ermöglicht. Ist das charakteristische Verhältnis $\lambda_3/\lambda_1 < 1$, bildet sich ein Zweiphasensystem aus, das die Copolymere als mikrodispers verteilte Phase innerhalb einer kontinuierlichen PA-Matrix enthält.

Bei der dynamischen Vernetzung ist stets zu beachten, dass die Viskosität der Elastomerphase durch den parallel ablaufenden Vernetzungsprozess stetig anwächst. Während das Volumenkonzentrationsverhältnis bei diesem Prozess konstant bleibt, verschiebt sich das Viskositätsverhältnis durch die Vernetzung der dispers verteilten Phase zu größeren Werten hin. Wird die Bedingung $\lambda_3/\lambda_1 < 1$ bereits zu Beginn des Prozesses erfüllt, werden die Voraussetzungen für eine günstige Dispergierung noch verbessert, d.h. es ist noch leichter, feine, mikrodispers verteilte und hochvernetzte Partikel der elastomeren Phase in der PA-Matrix zu erhalten.

Für die rheologischen Untersuchungen der Proben wurde ein Rotationsrheometer des Typs Rheometrics DSR 800 verwendet.

Speicher- und Verlustmodul sowie die komplexe Viskosität wurden bei jeweils konstanter Temperatur (200 bis 250˚C) im Frequenzbereich zwischen $10^{-2}$ und $10^3$ (rad/s) bestimmt.

Methoden zur Bestimmung der komplexen Viskosität finden sich in:
Fließverhalten von Stoffen und Stoffgemischen, Hüthig & Wepf Verlag Basel - Heidelberg - New York, 1986.

Die erfindungsgemäßen Formmassen enthalten vernetzte, feindisperse Elastomerphasen, welche einen Gelanteil von mindestens 60 %, bevorzugt mindestens 80 % und besonders bevorzugt von größer 90 %, aufweisen.

Der Gelanteil der durch Pfropfung zugänglichen Verträglichkeitsvermittler ist bevorzugt kleiner 5 % und besonders bevorzugt kleiner 1 %.

Die erfindungsgemäße Formmasse ist bevorzugt erhältlich dadurch, dass die Vernetzung der dispersen Elastomerphase "in situ" radikalisch hergestellt worden ist. Für diesen Zweck werden somit die Edukte, d.h. das Polyamid, das Ethylencopolymer und der Verträglichkeitsvermittler mit einem radikalischen Initiator bevorzugt, mit einem peroxidischen Initiator gemischt und dann während der Mischung die Vernetzung durchgeführt. Alternativ ist es ebenso möglich, dass nur die Edukte, d.h. das Polyamid, das Copolymer und der Verträglichkeitsvermittler zuerst gemischt werden und dass dann nachfolgend während der Vermischung oder auch nach Abschluss der Granulatbildung bzw. Formteilbildung eine Vernetzung mittels Eintrag von energiereicher Strahlung erfolgt.

Aus stofflicher Sicht umfasst die vorliegende Erfindung in Bezug auf die Polyamide alle an und für sich im Stand der Technik bekannten Polyamide, die zur Herstellung einer thermoplastischen Matrix geeignet sind.

Als Polyamide (PA) werden vorteilhafterweise Polyamide basierend auf $C_6$-$C_{12}$-Lactamen oder $\omega$-Aminocarbonsäuren mit 4 bis 18 Kohlenstoffatomen, bevorzugt 6 bis 12 Kohlenstoffatomen, oder Polykondensate verwendet,

erhältlich aus der Polykondensation von mindestens einem Diamin aus der Gruppe der aliphatischen Diamine mit 4 bis 18 C-Atomen, der cycloaliphatischen Diamine mit 7 bis 22 C-Atomen in Kombination mit mindestens einer Dicarbonsäure aus der Gruppe aus aliphatischen Dicarbonsäuren mit 4 bis 44 C-Atomen, cycloaliphatischen Dicarbonsäuren mit 8 bis 24 C-Atomen und aromatischen Dicarbonsäuren mit 8 bis 20 C-Atomen. Die ω-Aminocarbonsäuren oder die Lactame sind ausgewählt aus der Gruppe aus ε-Aminocapronsäure, 11-Aminoundecansäure, 12-Aminododecansäure, ε-Caprolactam, Enantholactam, Laurinlactam. Weiterhin ist es erfindungsgemäß möglich, Mischungen solcher Polymerisate bzw. Polykondensate einzusetzen. Erfindungsgemäß geeignete Diamine, die mit einer Dicarbonsäure kombiniert werden, sind beispielsweise 2,2,4- oder 2,4,4-Trimethylhexamethylendiamin, 1,3- oder 1,4-Bis(aminomethyl)cyclohexan, Bis(3-methyl-4-aminocyclohexyl)methan, Bis(p-aminocyclohexyl)methan, m- oder p-Xylylendiamin, 1,4-Diaminobutan, 1,5-Diamino-2-methylpentan, 1,6-Diaminohexan, 1,8-Diaminooctan, 1,9-Diaminononan, 2-Methyl-1,8-diaminooctan, 1,10-Diaminodecan, 1,12-Diaminododecan und die Dicarbonsäuren ausgewählt sind aus der Gruppe der Bernsteinsäure, Glutarsäure, Adipinsäure, Suberinsäure, Pimelinsäure, Korksäure, Azelainsäure, Sebazinsäure, Dodecandicarbonsäure, Oktadecandicarbonsäure, 4-Cyclohexan-dicarbonsäure, Terephthalsäure, Isophthalsäure und den Naphthalindicarbonsäuren.

Konkrete Beispiele für (Co)Polyamide für die erfindungsgemäßen Formmassen sind daher Homo- oder Copolyamide aus der Gruppe aus PA 6, PA 66, PA 11, PA 46, PA 12, PA 1212, PA 1012, PA 610, PA 612, PA 69, PA 6T, PA 6I, PA 9T, PA 10T, PA 12T, PA 12I, deren Gemische oder Copolymere auf Basis der verwendeten Monomeren. Bevorzugt sind erfindungsgemäß auch Copolyamide PA 12T/12, PA 10T/12, PA 12T/106 und PA 10T/106. Weiterhin sind z.B. PA 6/66, PA 6/612, PA 6/66/610, PA 6/66/12, PA MACMI, PA MACMT, PA 66/6I/6T, PA MXD 6/6, PA 6T/66, PA 6/6T, PA 6/6I, PA 6T/6I, PA 6I/6T oder deren Gemische ebenfalls bevorzugte Formmassen.

Die erfindungsgemäßen Polyamid-Formmassen können aber auch Polyamid-Blockcopolymere enthalten, die Polyester-, Polyether-, Polysiloxan-, Polycarbonat-, Polyacrylat-, Polymethacrylat- oder Polyolefinsegmente als weitere Bausteine neben einem Anteil von mindestens 20 % Polyamid-Bausteinen enthalten. Als Vertreter dieser Polymerklasse seien Polyetheramide, Polyetheresteramide und Polyesteramide genannt, wobei PA 12 als Polyamidsegment besonders bevorzugt ist.

Bei den Ethylen-Copolymeren werden bevorzugt als Comonomere Propen, Buten, Penten, Hexen, Octen, Decen, Undecen, Butadien, Styrol, Acrylnitril, Isopren, Isobutylen, Derivate der (Meth)acrylsäure, Vinylacetat, Tetrafluorethylen, Vinylidenfluorid, Hexafluorpropen und 2-Chlorbutadien eingesetzt.

Bei den Ethylencopolymeren sind insbesondere die bevorzugt, bei denen ein Ethylenvinylacetatcopolymer (EVA) eingesetzt wird. Die EVA-Copolymere haben bevorzugt einen Vinylacetatgehalt von 20 bis 80 %, bevorzugt von 30 bis 70 %, insbesondere von 40 bis 60 %. Es können dabei auch teilverseifte EVA-Copolymere verwendet werden, bei denen der Verseifungsgrad maximal 50 % beträgt. Die EVA-Copolymere können auch noch weitere Comonomere enthalten.

Bei den Verträglichkeitsvermittlern auf Basis eines Ethylen-Copolymeren werden als Comonomere zum Ethylen bevorzugt Propen, Buten, Penten, Hexen, Octen, Decen, Undecen, Butadien, Styrol, Acrylnitril, Isopren, Isobutylen, Derivate der (Meth)acrylsäure, Vinylacetat, Tetrafluorethylen, Vinylidenfluorid, Hexafluorpropen und 2-Chlorbutadien eingesetzt.

In Bezug auf den Verträglichkeitsvermittler ist es bevorzugt, wenn das Polymerrückgrat ebenfalls ein Ethylen-Vinylacetat-Copolymer (EVA) ist. Geeignete Propfreagenzien sind Maleinsäureanhydrid(meth), Acrylsäure, Glycidyl (meth)acrylat, Butyl(meth)acrylat sowie Methyl(meth)acrylat. Bevorzugt ist dabei Maleinsäureanhydrid (MAH). Für den Fall, dass Polyamid-EVA-Blends mit einem Verträglichkeitsvermittler basierend auf einem EVA-Polymerrückgrat und MAH als Pfropfreagenz eingesetzt werden, sind als Verträglichkeitsvermittler die kommerziellen MAH-gepfropften Ethylenvinylacetat-Copolymere, wie z.B. FUSABOND MC190D (0.76% MAH) oder MC250D (1.38% MAH) von DuPont Co., Europe geeignet.

Bevorzugte Verträglichkeitsvermittler auf Basis eines BVA-Polymerrückgrats haben die bevorzugten Eigenschaften wie folgt:

Vinylacetatgehalt: > 35 mol-%
MVI: (190 ˚C/2,16 kg) > 20
Pfropfgrad: 0,2 bis 3 % (insbesondere 0,5 bis 1,5 %)
Gelanteil: < 5 %, bevorzugt < 1 %

Natürlich können die erfindungsgemäßen thermoplastische Polyamid-Formmassen weiterhin übliche und dem Fachmann allgemein bekannte Zusatzstoffe alleine oder in Kombination enthalten, die ausgewählt sind aus der Gruppe, bestehend aus Schlagzähmittel, Fremdpolymer, Haftvermittler, Antiflammmittel, Verstärkungsmittel wie Glas- und C-Fasern, UV- oder Wärmestabilisatoren, Stabilisatoren gegen Bewitterung, Mineralien, Verarbeitungshilfsmittel, Kristallisations-Beschleuniger oder -Verzögerer, Oxidationsschutzmittel, Fließhilfsmittel, Gleitmittel, Entformungsmittel, Flammschutzmittel, Pigmente, Farb- und Markierungsstoffe und Füllstoffe wie Russ oder Graphit, Kohlenstoff-Nanofibrillen oder auch Nanoteilchen in Plättchenform, entsprechend allen bei Polyamiden bekannten Zusatzstoffen, wie sie für die jeweilige Anwendung notwendig sind.

Den zuvor beschriebenen Formmassen können für bestimmte Zwecke auch andere übliche Polymere wie Polyester, Polyolefine, Polycarbonate, AN- und ABS-Polymerisate, funktionalisierte Copolyolefine und Ionomere zugesetzt sein.

Als weitere Zusatzstoffe sind den erfindungsgemäßen thermoplastischen Polyamid-Formassen Schlagzähmodifikatoren zugesetzt. Diese sind z. B. Copolymere auf Polyolefinbasis von tiefer Glasumwandlungstemperatur, die Acrylsäure enthalten oder mit Maleinsäureanhydrid gepfropft sein können. Insbesondere seien hier Schlagzähmodifikatoren wie Ethylen-Propylen-Copolyolefine oder Ethylen-Propylen-Dien-Kautschuke (EPDM) oder Acrylatkautschuke genannt.

In bevorzugten Ausführungsformen enthalten die Formmassen weiterhin nanoskalige Füllstoffe. In einer besonderen Ausführungsform der Erfindung sind die nanoskaligen Füllstoffe entweder Siliziumdioxid oder Siliziumdioxid-Hydrate. In der Polyamid-Formmasse liegen gewisse nanoskaligen Füllstoffe in einer Ausführungsform als ein gleichmäßig dispergiertes, schichtförmiges Material vor. Vor dem Einarbeiten in die Matrix besitzen sie eine Schichtdicke von 0,7 bis 1,2 nm und einen Zwischenschichtabstand der Mineralschichten von bis zu 5 nm.

Die Erfindung betrifft weiterhin ein Verfahren zur Herstellung einer wie vorstehend beschriebenen Formmasse (Patentanspruch 14).

Das erfindungsgemäße Verfahren zeichnet sich nun dadurch aus, dass die Edukte zur Herstellung der Formmasse, d.h. das Polyamid, das Copolymer sowie der Verträglichkeitsvermittler in einem Mischaggregat vermischt werden und dass eine Vernetzung der dispersen Elastomerphase durchgeführt wird. Die Vernetzung der dispersen Elastomerphase kann dabei grundsätzlich auf zwei verschiedene Arten erfolgen.

Zum einen ist es möglich, die Vernetzung so durchzuführen, dass mit Zugabe der Edukte zur Herstellung der Formmasse, d.h. mit dem Polyamid, mit dem Copolymer sowie mit dem Verträglichkeitsvermittler gleichzeitig ein radikalischer Initiator, bevorzugt ein peroxidischer Initiator zugefügt wird. Durch die Zugabe dieses Initiators während des Herstellungsprozesses erfolgt somit nicht nur eine Vernetzung der dispersen Elastomerphase, sondern gleichzeitig eine Anbindung der Elastomerphase an das Polyamid, nämlich dadurch, dass der Verträglichkeitsvermittler über die aufgepfropften funktionellen Gruppen mit den Endgruppen des Polyamid chemisch reagieren. Durch diese "in situ"-Vernetzung der dispersen Phase wird offensichtlich eine einheitliche Partikelgröße der dispersen Phase in dem angegebenen Größenbereich, d.h. in Grö-ßen von > 0,2 bis 3 $\mu$m, bevorzugt von > 0,5 $\mu$m bis 3 $\mu$m erreicht. Beim erfindungsgemäßen Verfahren ist hervorzuheben, dass durch die "in situ"-Reaktion eine einheitliche Partikelgrößenverteilung erzielt wird, die, wie vorstehend bereits gezeigt, für die physikalischen Eigenschaften der erfindungsgemäßen Formmasse entscheidend sind.

Alternativ hierzu ist es auch möglich, die Vernetzung nicht mit einem peroxidischen Initiator durchzuführen, sondern durch Energieeintrag eine entsprechende Vernetzung zu erreichen. Der Vorteil dieser Variante ist darin zu sehen, dass die Vernetzung während des Mischprozesses, aber auch erst nach Bildung des Polymergranulats bzw. des Formteils durchgeführt werden kann. Beim erfindungsgemäßen Verfahren sind grundsätzlich als Mischaggregat alle Mischaggregate geeignet, wie z.B. Walzen, Mehrwalzenstühle, Dissolver, Innenmischer oder Mischextruder. Bevorzugt als Mischaggregat sind allerdings Doppelschneckenextruder, wobei hier wiederum Doppelschneckenextruder günstig sind, die Förderelemente mit geringer Gangsteigung sowie räumlichen getrennten abgestuften Knetblöcken aufweisen. Die Schneckendrehzahl eines derartigen Doppelschneckenextruders ist bevorzugt 150 bis 400 $min^{-1}$. Die Temperatur der Einzugszone soll < 120 °C sein.

Die Erfindung betrifft weiterhin die Verwendung der erfindungsgemäßen Formmassen zur Herstellung von thermoplastisch verarbeitbaren Formartikeln sowie die aus den erfindungsgemäßen Zusammensetzungen erhältlichen Formartikel.

Beispiele derartiger Formartikel schließen ein: Steckverbindungen, Dämpfungs-, insbesondere Schwingungs- und Stoßdämpfungselemente, akustische Dämpfungselemente, Profile, Folien, insbesondere dämpfende Folien, Verpackungsfolien oder einzelne Schichten einer Mehrschichtverpackungsfolie, Fußmatten, Schuheinlagen, Schuhe, insbesondere Schischuhe, Schioberbelag, Schuhsohlen, Elektronische Bauteile, Gehäuse für elektronische Bauteile, Werkzeuge, Dekorative Formkörper, Verbundwerkstoffe, etc.

Insbesondere beinhalten die Formartikel: Fluidführende Leitungen (Gase und/oder Flüssigkeiten), insbesondere öl- und kraftstoffführende Leitungen, antistatisch ausgerüstete Leitungen und Behälter für den Automobilbereich, glatte und gewellte Rohre, Rohrabschnitte, Stutzen (Ansaug-, Entlüftungs-, Einfüll-, Ablass-), flexible Schläuche, Fittings zum Verbinden von Schläuchen, Wellrohren und medienführenden Leitungen, Bestandteil von Mehrschichtleitungen (Außen-, Zwischen-, Innenschicht), Behälter, Teile von Behältern (z.B. Verschlüsse), Einzelne Schichten von Mehrschichtbehältern, Abdeckungen oder Kurbelgehäuseteile im Automobilbereich, Hydraulikleitungen, Bremsleitungen, Bremsflüssigkeitsbehälter, Kühlflüssigkeitsleitungen. Die Formteile sind durch die Verfahren Spritzguss, Extrusion oder Blasformen herstellbar.

Die Erfindung wird nachfolgend anhand von Beispielen und Figuren näher erläutert.

## Beispiele

### PA12-EVA-Blendgenerierung mittels Megacompounder (ZSK 40)

Die PA12-EVA-Blendherstellung wird zunächst im Rahmen eines Zweistufenverfahrens erläutert. Im ersten Teilschritt erfolgt die Aufpfropfung des Maleinsäureanhydrids (MAH) auf das EVA-Copolymer wobei der Verträglichkeitsvermittler entsteht. Im zweiten Teilschritt erfolgt die dynamische Vernetzung der synthetischen Kautschukphase unter gleichzeitiger Ausbildung der angestrebten Morphologie.

Bei einem PA12-EVA-Massekonzentrationsverhältnis von 50:50 sowie unter Zugrundelegung eines Viskositätsverhältnisses, wie es bei einer Schneckendrehzahlen von n=300 $min^{-1}$ vorliegt, entstehen thermoplastische Elastomerblends, die aus einer kontinuierlichen PA12-Matrix und darin eingebetteten, hochvernetzten EVA-Partikeln bestehen. Zur Intensivierung der PA12-EVA-Wechselwirkungen wird dem Komponentensystem das vorabgefertigte EVA-g-MAH als Verträglichkeitsvermittler zugesetzt. Die PA12-EVA-Blends werden mit Hilfe eines gleichsinnig drehenden Zweischneckenextruders, Typ ZSK 40 L/D = 56 der Fa. Coperion Werner & Pfleidener, aufbereitet. Die eingesetzten Polymere werden in Tabelle 1 näher charakterisiert.

### Verfahrensschritt 1: Pfropfung des EVA-Copolymers mit MAH (Beispiel 1)

Im ersten Verfahrensteilsschritt läuft die radikalische Pfropfungsreaktion von kondensierbarem MAH auf das EVA-Copolymer ab. Die realisierten Prozessparameter sind in der Tabelle 2 zusammengestellt. MAH und 2,5-Di(tert-butyl-peroxy)-2,5-dimethylhexan (DHBP) werden mit dem EVA vorgemischt. Die Materialien werden mittels eines gravimetrischen Dosiersystems kontinuierlich dem Zweischneckenextruder ZSK 25 - L/D = 44 zugeführt. Auf 2,0 Teile MAH werden 0,2 Teile DHBP eingesetzt. Die Schneckendrehzahl betrug 150 $min^{-1}$.

Das resultierende Pfropfcopolymer ist in Tabelle 1 charakterisiert.

**Tabelle 1: Verwendete Polymere**

| Polymer | Dichte (p20°C) (g/cm$^3$) | Schmelzpunkt Tm (°C) | Bruch spannung (MPa) | Bruch dehnung (%) | Zug-E- Modul (MPa) | Shore A (D) | MVI (ml/10min) | Spezielle Eigenschaften |
|---|---|---|---|---|---|---|---|---|
| Levamelt 500 | ca. 1 | 40 | 5 | 1000 | - | 33 (A) | 7,6 (230°C / 2,16 kg) | VA = 50 ± 1,5 Gew.-% |
| GRILAMID L16A (PA12) | 1,01 | 178 | 50 | 200 - 300 | 1100 | 70 (D) | 65 (230 °C / 2,16 kg) | $NH_2$-Endgruppen = 100 μeq/g |
| EVA-g- MAH (Bsp. 1) | 0,96 | 50 | 5 | 1000 | - | 46 (A) | 21 (190 °C / 2,16 kg) | VA = 40 ± 1,5 Gew.-%; MAH = 0,7 Gew.-% |
| VA = Vinylacetat-Konzentration; MAH = Maleinsäureanhydrid | | | | | | | | |

**Tabelle 2: Allgemeine Gehäusesolltemperatur für die Propfungsreaktion von EVA-Copolymeren**

| Zylinder-Nummer | 1 | 2 | 3 | 4 | 5 | 6 | 7 | 8 | 9 | 10 | 11 |
|---|---|---|---|---|---|---|---|---|---|---|---|
| Temperatur-Profil [°C] | 100 | 150 | 180 | 200 | 200 | 200 | 190 | 190 | 180 | 180 | 170 |

Rheologische Untersuchungen, die die Stoffwertfunktionen Speicher- (G'(ω)), Verlustmodul (G"(ω)) und komplexe Viskosität (η*(ω)) einbeziehen, zeigen eindeutig, dass das MAH-gepfropfte EVA-Copolymer, generiert mit 2,0 % MAH und 0,2 % DHBP (MAH:DHBP = 10:1) immer noch ein thermoplastisches Deformationsverhalten besitzt und damit keine peroxidinitiierte EVA-Vorvernetzung stattgefunden hat.

**Bestimmung des MAH-Pfropfgrads**

Der MAH-Pfropfgrad wird durch Bestimmung des Sauerstoffgehaltes (CHN-Analyse) des EVA-g-MAH bestimmt.

$$[O]_{total} - [O]_{EVA} = [O]_{gepfropfte\ MAH}$$

$$[O]_{gepfropfte\ MAH} \times [(C + H)/O]_{MAH} = [C + H]_{gepfropfte\ MAH}$$

$$\text{MAH-Pfropfungsgrad} = [MAH]_{EVA\text{-}g\text{-}MAH} = [O]_{gepfropfte\ MAH} + [C+H]_{gepfropfte\ MAH}$$

**Bestimmung des Gelanteils**

Der Gelanteil der vernetzten EVA-Phase und der Verträglichkeitsvermittler EVA-g-MAH wurden durch Heiß-Extraktion mit Chloroform bestimmt. Dazu wurden die Proben 15 h in siedendem Chloroform unter Rückfluss extrahiert. Nach Abtrennung des unlöslichen Anteils wurde dieser bis zur Gewichtskonstanz getrocknet und dann ausgewogen. Der Gewichtsanteil des unlöslichen Rückstandes bezogen auf das Ausgangsgewicht ergibt den Gelanteil in %.

Der Pfropfgrad des hergestellten EVA-g-MAH ist 0,7 %, der Gelanteil < 1 %.

**Verfahrensschritt 2: Reaktive Kompatibilisierung sowie dynamische EVA-Vernetzung und Morphologieausbildung der PA-EVA-Vulkanisate (Beispiele 2 -4)**

Die Generierung der PA12-EVA-Blends wurde mittels eines gleichsinnig drehenden, dichtkämmenden Zweischneckenextruders, Typ ZSK 40 - L/D = 56 realisiert Bei dem praktizierten Verfahrenskonzept ist der reaktive Kompatibilisierungsprozess mit der Blendgenerierung zu einem Einstufenprozess vereint. Um die Ankopplungsreaktion zwischen dem EVA-g-MAH und der Aminoendgruppen des PA12 bzw. die dynamischen Vernetzung der dispersen Phase des PA12-EVA-Blends zu vervollständigen, wurden Förderelemente mit geringer Gangsteigung sowie räumlich getrennte, abgestaute Knetblocksätze installiert.

Durch diese Maßnahme werden der Schneckenkanalfüllgrad und damit die Verweilzeit der Komponenten im Extruder sowie die Scherwirkung der Schnecke erhöht.

Ein für die Generierung solcher Blends typisches axiales Zylindertemperaturprofil sowie die eingesetzte Schnekkengeometrie sind in Figur 1 dargestellt. Die Schneckendrehzahl betrug 290 $min^{-1}$. Die Temperatur der Einzugszone muss so niedrig wie möglich gehalten werden, weil das Venetzungsagens sich bei höheren Temperaturen verflüchtigen kann.

Das EVA-Copolymer, der Verträglichkeitsvermittler (EVA-g-MAH) und das PA12 werden mittels zweier gravimetrischen Dosiersysteme der Zone 1 der Extrusionsmaschine gravimetrisch zugeführt. Das Vernetzungsagens wurde mittels einer Mikrodosiereinheit dem Extruder zudosiert und bei einer niedrigen Massetemperatur (160°C<Tm<180°C) zur Vermeidung einer spontanen Peroxiddegradation in den Basiskomponenten homogen, verteilt. Durch die Wahl eines adäquaten axialen Zylindertemperaturprofils steigt die Plastifikattemperatur in Förderrichtung an, der thermisch initiierte Peroxidzerfall setzt ein. Eine peroxidinitiierte radikalische Vulkanisation der dispersen Phase und der Zer- und Verteilvorgang sowie der Kompatibilisierungsvorgang der schmelzflüssigen Polymerkomponenten führen zu einem Polymerblend, welches die synthetische Kautschukphase in vernetztem, feindispersem Zustand enthält.

Die Vernetzungsreaktion sollte unter der Einwirkung hoher Verformungsspannungen und Deformationsgeschwindigkeiten ablaufen, damit eine weiterführende, effiziente Zerteilung bzw. Dispergierung der Elastomerphase zu kleinsten Partikeln ($0{,}2 \leq d_p \leq 3{,}0\ \mu m$) eintritt. Die hierzu erforderlichen Prozess- und Verfahrensparameter lassen sich mittels eines modularen Schneckenkonzepts realisieren, welches präzise positionierte Mischelemente und breite Intensiv-Knetblöcke enthält und gleichzeitig lokale reaktionspezifische Masseverweilzeiten gewährleistet.

Das charakteristische Viskositätsverhältnis der in den Beispielen 2 bis 4 eingesetzten Polymere - Grilamid L 16A und Levamelt 500 - beträgt

$$\Lambda_3/\lambda_1 = 0{,}7.$$

Bei dieser Abschätzung wurden die komplexen Viskositäten bei einer Frequenz von 100 rad/s zugrundegelegt.

In Tabelle 3 sind exemplarisch ausgewählte Rezepturansätze aufgeführt.

Die Blends aus PA12 und EVA zeigen im Vergleich zu den unvernetzten Blends praktisch keine Nachteile hinsichtlich der mechanischen Eigenschaften auf. E-Modul, Bruchspannung und Bruchdehnung liegen im gleichen Bereich und sind nahezu unabhängig vom Vernetzungsgrad der Elastomerphase. Dagegen nimmt die Ölquellung mit zunehmendem Vernetzungsgrad der EVA-Domäne deutlich ab. Bei gleichem EVA-Anteil beträgt der Quellungsgrad des Blends (Beispiel 4) lediglich 2,1 % und ist damit um einen Faktor 3,5 kleiner als das nicht-vernetzte Blend (Beispiel 2).

**Tabelle 3: Rezepturen und Eigenschaften von PA12-EVA-Blends, die mit dem Extruder ZKS 40 hergestellt wurden.**

| **Beispiel** | 2 | 3 | 4 |
|---|---|---|---|
| **Komponenten** | V50/47/3-L16-EV50-EVA-g-MAH | V50/47/3-L16-EV50-EVA-g-MAH-DI 0,25 | V50/47/3-L16-EV50-EVA-g-MAH-DI 0,6 |
| EVA (Levamelt 500) | 47 | 47 | 47 |
| PA12 (GRILAMID L16A) | 50 | 50 | 50 |
| EVA-g-MAH | 3 | 3 | 3 |
| Peroxid DIPP | 0 | 0,25 | 0,60 |
| **Eigenschaften** | | | |
| Shore A , 15 sec | 94 | 95 | 95 |
| Zug-E-Modul, MPa | 541 | 432 | 474 |
| Bruchspannung, MPa | 26 | 26,6 | 24 |
| Bruchdehnung, % | 192 | 150 | 179 |
| Ölquellungsgrad, DIN 53521 IRM 903 Öl, 70 ˚C/ 22h, % | 7,3 | 5,1 | 2,1 |
| MVI, 230˚C/10kg, ml/10 min | 27,8 | 46 | 16,9 |

Der Partikeldurchmesser der dispergierten Phase nimmt bei Zusatz von EVA-g-MAH um einen Faktor 3 ab. Ohne Verträglichkeitsvermittler resultiert eine uneinheitliche Größenverteilung im Bereich 3 - 10 $\mu m$, wobei der Anteil größerer Partikel überwiegt. Durch Zusatz des Verträglichkeitsvermittlers EVA-g-MAH resultiert eine deutlich einheitlichere Verteilung der Partikeldurchmesser im Bereich zwischen 0,2 und 3 $\mu m$.

Der Einfluss des Verträglichkeitsvermittlers lässt sich anhand der REM-Aufnahmen, die in Figur 2 und 3 wiedergegeben sind, belegen. Figur 2 zeigt in 1000-facher Vergrößerung die Morphologie eines PA12-EVA-Blends (GRILAMID L16A : LEVAMELT 500 = 50:50), das ohne Verträglichkeitsvermittler, aber unter den gleichen Bedingungen wie Beispiel 4 hergestellt wurde. Die EVA-Partikelgröße liegt größtenteils deutlich oberhalb von 3$\mu m$. Im Vergleich dazu zeigt Figur 3, eine REM-Aufnahme des PA12-EVA-Blends aus Beispiel 4, eine Elastomerphase mit Partikelgrößen deutlich unter 3 $\mu m$, die homogen über den betrachteten Ausschnitt verteilt sind. Große Elastomerbereiche in Form von Agglomeraten treten nicht auf.

Allerdings sollte die Konzentration des eingesetzten Verträglichkeitsvermittlers hohe Beachtung geschenkt werden, da eine zu hohe Konzentration zu einer Vernetzung der Polyamidphase führt. Infolge Bildung grö-ßerer Partikel nimmt dann die Ölquellung zu.

Der Verträglichkeitsvermittler, wie z.B. EVA-g-MAH, wird in einer Konzentration von 1 - 10 Gew.-%, bevorzugt von 1 bis 7 Gew.-% und besonders bevorzugt von 1 bis 5 Gew.-%, bezogen auf die Formmasse, eingesetzt.

In der nachfolgenden Tabelle 4 sind verschiedene Peroxide zusammengestellt, die für die Herstellung der erfindungsgemäßen Formmasse geeignet sind.

Besonders effizient für die EVA-Vernetzung sind die Peroxide DHBP und DIPP. Da EVA freie Essigsäure enthält (bis zu 0,1 Gew.-%) ist es in Bezug auf die Vollständigkeit der EVA-Vernetzung vorteilhaft Magnesiumoxid als Base zur Neutralisierung hinzu zugeben. Ohne diesen Zusatz wird ein Teil des Peroxids heterolytisch zersetzt und steht für die Radikalbildung nicht mehr zur Verfügung.

Tabelle 4: Die Eigenschaften von Peroxiden, welche für die EVA-Vernetzung geeignet sind.

| Peroxide | Chemische Struktur | Halbe Werzeit ($t_{1/2}$) | Aktive Sauerstoffzahl | Molmasse (g/mol) |
|---|---|---|---|---|
| Peroxybenzoesäure-(2-methyl-2-butylester TAPB 90% | 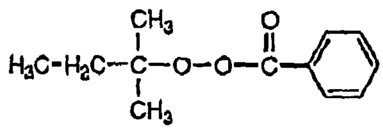 | 1 min (160˚C) | 7,68 Ea = 143 kcal/mol | 208,3 |
| Peroxybenzoesaure-tert.-butylester TBPB | 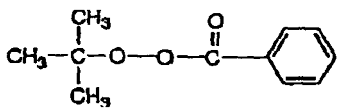 | 1 min (166˚C) | 8.2 Ea = 34.1 kcal/mol | 194,2 |
| Dicumylperoxide DCUP | 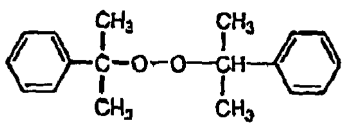 | 0.2 min (196˚C) 1 min (177˚C) | 5.9 Ea= 36.4 Kcal/mol | -270-4 |
| t-Butylcumyl-peroxide BCUP | 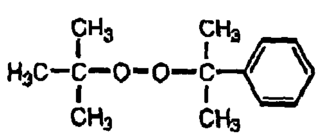 | 0.2 min (196˚C) 1 min (180˚C) 1h (140˚C) | 7,7 Ea =154 KJ/mol | 208 |
| 2,5-Di(tert-butyl-(poroxy)-2,5-dimethyl-hexane* DHBP | 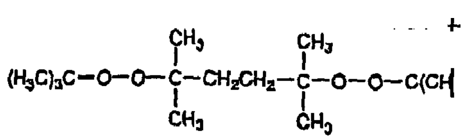 | 1 min (190˚C) 6min (159˚C) 10 h (119˚C) | 11.02 Ea= 39.1 Kcal/mol | 290.4 |
| 1,3-Di(2-tert.-butylper-oxyisopropyl)-benzol TBPDB oder DIPP• | 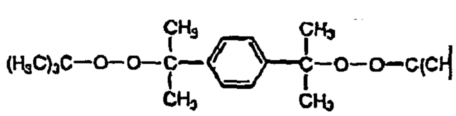 | 1 min (190˚C) 10 h (119) | 9.45 | 338.5 |
| Di-t-butylperoxid DTBP | $(H_3C)_3$-O--O-C$(CH_3)_3$ | 1 min (190˚C) 1h (146˚C) | 10,9 Ea = 152 kJ/mol | 146.2 |
| 2,5-Bis-(tert.-butyl. peroxy) -2,5-dim ethyl-3-hexin DYBP | 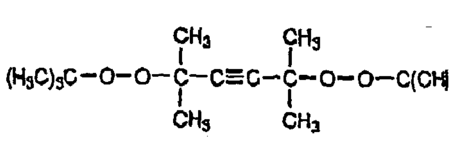 | 1 min (193 ˚C) 10 h (128˚C) | 11.17 Ea = 154 kJ/mol | 286.4 |

**Beispiel 5:**

Analog den Beispielen 3 und 4 wird ein dynamisch vernetztes PA12-EVA-Blend aus den Komponenten GRILAMID L16A, LEVAMELT 500 und dem Verträglichkeitsvermittler EVA-g-MAH, hergestellt in Beispiel 1, generiert. Die Ölquellung und die mechanischen Eigenschaften an DIN-Zugstäben wurde bestimmt.

Des weiteren wurden mit dem Blend aus Beispiel 5 Monorohre der Dimension 8x1 bei unterschiedlichen Abzugsgeschwindigkeiten auf einem Nokia Maillefer Coex5 Rohrextruder hergestellt. Die Zylindertemperaturen betrugen 200 - 220˚C, die Schneckendrehzahl 75 Upm (40 m/s) bzw. 112 Upm (60 m/s) und die Massetemperatur 217˚C. Für beide Abzugsgeschwindigkeiten (40 und 60 m/s) wurden übereinstimmende Rohreigenschaften bestimmt. Die Ergebnisse sind in Tabelle 5 zusammengefasst.

Die von den Rohrdimensionen unabhängige Vergleichsspannung berechnet sich aus dem Berstdruck wie folgt:

$$VS = \frac{P_B * d_m}{20 * s_{min}}$$

$P_B$ = Berstdruck [bar]
$d_m$ = $d_1$ - $S_{min}$, mittlerer Rohrdurchmesser [mm]
$d_1$ = Aussendurchmesser [mm]
$S_{min}$ = minimale Rohrwanddicke [mm]
VS = Vergleichsspannung [MPa]

**Tabelle 5:**

| | | | | |
|---|---|---|---|---|
| GRILAMID L16A NATUR | Gew.-% | | | 50 |
| LEVAMELT 500 | Gew.-% | | | 45 |
| EVA-g-MAH aus Beispiel 1 | Gew.-% | | | 5 |
| Peroxid DHBP | Gew.-% | | | 0.5 |
| **Ölquellung** | | | | |
| Gewichtszunahme | DIN 53521 14d,23˚C, IRM 903 Öl | div | Gew.-% | 1,35 |
| **Mechanische Eigenschaften** | | | | |
| E-Modul | ISO 527 | trocken | MPa | 400 |
| Streckspannung | ISO 527 | trocken | MPa | 13,2 |
| Streckdehnung | ISO 527 | trocken | % | 7,4 |
| Reißfestigkeit | ISO 527 | trocken | MPa | 18,3 |
| Reißdehnung | ISO 527 | trocken | % | 154 |
| Schlagzähigkeit Charpy | ISO 179, 23˚C | trocken | $kJ/m^2$ | nb |
| Schlagzähigkeit Charpy | ISO 179, -30˚C | trocken | $kJ/m^2$ | nb |
| Kerbschlagzähigkeit Charpy | ISO 179, 23˚C | trocken | $kJ/m^2$ | nb |
| Kerbschlagzähigkeit Charpy | ISO 179, -30˚C | trocken | $kJ/m^2$ | 7,7 |
| **Thermische Eigenschaften** | | | | |
| MVR | 275˚C/5kg | trocken | $cm^3/10min$ | 18 |
| Schmelzpunkt | - | trocken | ˚C | 177,5 |

(fortgesetzt)

| Thermische Eigenschaften | | | | |
|---|---|---|---|---|
| Schmelzenthalpie | - | trocken | J/g | 28,6 |
| Kristallisationstemperatur | - | trocken | ˚C | 156,2 |
| Kristallisationsenthalpie | - | trocken | J/g | 26,6 |
| Kristallisationsgeschwindigkeit | - | trocken | J/g/min | 19,3 |
| **Rohrextrusion 40 m/min** | | | | |
| Durchmesser | außen | trocken | mm | 7,95 |
| Wandstärke | minimal | trocken | mm | 0,89 |
| Berstdruck | DIN 73378 (23 ˚C) | trocken | bar | 30,1 |
| Berstdruck | SAE J2260 (23˚C) ($ZnCl_2$) | trocken | bar | 29,7 |
| Vergleichsspannung | 23 ˚C | trocken | MPa | 11,9 |
| Berstdruck | DIN 73378 (115 ˚C) | trocken | bar | 10,6 |
| Vergleichsspannung | 115˚C | trocken | MPa | 4,2 |
| **Rohrextrusion 60 m/min** | | | | |
| Durchmesser | außen | trocken | mm | 8,00 |
| Wandstärke | minimal | trocken | mm | 0,90 |
| Berstdruck | DIN 73378 (23 ˚C) | trocken | bar | 30,6 |
| Berstdruck | SAEJ2260 (23˚C) ($ZnCl_2$) | trocken | bar | 30,0 |
| Vergleichsspannung | 23 ˚C | trocken | MPa | 12,1 |
| Berstdruck | DIN 73378 (115 ˚C) | trocken | bar | 11,0 |
| Vergleichsspannung | 115 ˚C | trocken | MPa | 4,3 |

## Patentansprüche

1. Formmasse, umfassend 30 bis 80 Gewichts-% eines Polyamids, als thermoplastische Matrix und einer an die thermoplastische Matrix angebundenen vernetzten dispersen Elastomerphase enthaltend 10 bis 69 Gewichts-% eines Ethylen-Copolymers sowie 1 bis 10 Gewichts-% eines Verträglichkeitsvermittlers, ausgewählt aus den mittels Pfropfung von α, β ethylenisch ungesättigten Mono- und/oder Dicarbonsäuren bzw. deren Derivate auf ein Ethylen-Copolymer-Polymerrückgrat erhaltene Verbindungen, jeweils bezogen auf die Formmasse.

2. Formmasse nach Anspruch 1, **dadurch gekennzeichnet, dass** 1 bis 7 Gewichts-%, besonders bevorzugt 1 bis 5 Gewichts-%, bezogen auf die Formmasse, an Verträglichkeitsvermittler eingesetzt worden sind.

3. Formmasse nach Anspruch 1 oder 2, **dadurch gekennzeichnet, dass** der mittlere Partikeldurchmesser der vernetzten dispersen Elastomerphase im Bereich zwischen 0,2 μm und 3 μm, bevorzugt zwischen 0,5 μm bis 3 μm, liegt.

4. Formmasse nach mindestens einem der Ansprüche 1 bis 3, **dadurch gekennzeichnet, dass** die Vernetzung der dispersen Elastomerphase radikalisch hergestellt worden ist.

5. Formmasse nach Anspruch 4, **dadurch gekennzeichnet, dass** die Vernetzung "in situ" durchgeführt wird.

6. Formmasse nach Anspruch 4 oder 5, **dadurch gekennzeichnet, dass** eine peroxid-iniziierte radikalische Vernetzung durchgeführt worden ist.

7. Formmasse nach mindestens einem der Ansprüche 1 bis 4, **dadurch gekennzeichnet, dass** die Vernetzung der dispersen Elastomerphase durch Eintrag von energiereicher Strahlung erfolgt.

**8.** Formmasse nach einem der Ansprüche 1 bis 7, **dadurch gekennzeichnet, dass** das Ethylen-Copolymer Ethylen-Vinylacetat (EVA) ist.

**9.** Formmasse nach mindestens einem der Ansprüche 1 bis 8, **dadurch gekennzeichnet, dass** das Edukt für die Pfropfung auf das Polymerrückgrat ausgewählt ist aus Maleinsäureanhydrid (MAH), (Meth)acrylsäure, Glycidyl (meth)acrylat, Butyl-(meth)acrylat, Methyl(meth)acrylat.

**10.** Formmasse nach mindestens einem der Ansprüche 1 bis 9, **dadurch gekennzeichnet, dass** als Polyamid ein teilkristallines Polyamid eingesetzt wird.

**11.** Formmasse nach mindestens einem der Ansprüche 1 bis 10, **dadurch gekennzeichnet, dass** das Polyamid ausgewählt ist aus PA 6, PA 66, PA 11, PA 46, PA 12, PA 1212, PA 1012 , PA 610, PA 612, PA 69, PA 9T, PA 6T, PA 61, PA 10T, PA 12T, PA 12I, deren Gemische oder Copolymere hiervon.

**12.** Formmasse nach mindestens einem der Ansprüche 1 bis 11, **dadurch gekennzeichnet, dass** sie zusätzlich Additive enthält.

**13.** Formmasse nach einem der Ansprüche 1 bis 12, **dadurch gekennzeichnet, dass** das Volumenkonzentrationsverhältnis $\lambda_3 = \Phi_{DP}/\Phi_{CP}$ und das Verhältnis der komplexen Viskosität $\lambda_1 = \eta_{DP}/\eta_{CP}$ in folgender Beziehung stehen: $\lambda_3/\lambda_1 < 1$, wobei DP für die disperse und CP für die kontinuierliche Phase (thermoplastische Matrix) steht.

**14.** Verfahren zur Herstellung einer Formmasse nach mindestens einem der Ansprüche 1 bis 13, **dadurch gekennzeichnet, dass** das Polyamid, das Copolymer sowie der Verträglichkeitsvermittler in einem Mischaggregat umgesetzt und eine Vernetzung der dispersen Elastomerphase durchgeführt wird.

**15.** Verfahren nach Anspruch 14, **dadurch gekennzeichnet, dass** das Mischaggregat ausgewählt ist aus Walzen, Mehrwalzenstühle, Disolver, Innenmischer oder Mischextruder.

**16.** Verfahren nach Anspruch 15, **dadurch gekennzeichnet, dass** als Mischaggregat ein Doppelschneckenextruder eingesetzt wird.

**17.** Verfahren nach mindestens einem der Ansprüche 14 bis 16, **dadurch gekennzeichnet, dass** die Vernetzung durch Zugabe eines radikalischen Initiators mit dem Edukt der Formmasse erfolgt.

**18.** Verfahren nach mindestens einem der Ansprüche 14 bis 16, **dadurch gekennzeichnet, dass** die Vernetzung durch Eintrag von energiereicher Strahlung während oder nach Bildung der Formmasse erfolgt.

**19.** Verwendung der Formmasse nach mindestens einem der Ansprüche 1 bis 13 zur Herstellung von Formteilen.

## Claims

**1.** A moulding material comprising 30 to 80 wt.% of a polyamide as a thermoplastic matrix and of a cross-linked dispersed elastomer phase which is bound to the thermoplastic matrix and contains 10 to 69 wt.% of an ethylene copolymer and 1 to 10 wt.% of a compatibility promoter, selected from the compounds obtained by grafting $\alpha$, $\beta$ ethylene-unsaturated mono- and/or dicarboxylic acids or their derivatives onto an ethylene-copolymer polymer backbone, in each case based on the moulding material.

**2.** A moulding material according to claim 1, **characterised in that** 1 to 7 wt.%, especially preferably 1 to 5 wt.% of compatibility promoter was used, based on the moulding material.

**3.** A moulding material according to claim 1 or 2, **characterised in that** the average particle diameter of the cross-linked dispersed elastomer phase lies in the range between 0.2 $\mu$m and 3 $\mu$m, preferably between 0.5 $\mu$m and 3 $\mu$m.

**4.** A moulding material according to at least one of claims 1 to 3, **characterised in that** the cross-linking of the dispersed elastomer phase was produced radically.

**5.** A moulding material according to claim 4, **characterised in that** the cross-linking is carried out "in situ".

6. A moulding material according to claim 4 or 5, **characterised in that** peroxide-initiated radical cross-linking was carried out.

7. A moulding material according to at least one of claims 1 to 4, **characterised in that** the cross-linking of the dispersed elastomer phase is effected by introducing energy-rich radiation.

8. A moulding material according to any one of claims 1 to 7, **characterised in that** the ethylene copolymer is ethylene vinyl acetate (EVA).

9. A moulding material according to at least one of claims 1 to 8, **characterised in that** the educt for grafting onto the polymer backbone is selected from maleic anhydride (MAH), (meth)acrylic acid, glycidyl (meth)acrylate, butyl (meth) acrylate, methyl (meth)acrylate.

10. A moulding material according to at least one of claims 1 to 9, **characterised in that** the polyamide used is a partly crystalline polyamide.

11. A moulding material according to at least one of claims 1 to 10, **characterised in that** the polyamide is selected from PA 6, PA 66, PA 11, PA 46, PA 12, PA 1212, PA 1012, PA 610, PA 612, PA 69, PA 9T, PA 6T, PA 61, PA 10T, PA 12T, PA 12I, mixtures or copolymers thereof.

12. A moulding material according to at least one of claims 1 to 11, **characterised in that** it additionally contains additives.

13. A moulding material according to any one of claims 1 to 12, **characterised in that** the volume concentration ratio $\lambda_3 = \Phi_{DP}/\Phi_{CP}$ and the ratio of the complex viscosity $\lambda_1 = \eta_{DP}/\eta_{CP}$ are in the following relationship: $\lambda_3/\lambda_1 < 1$, where DP stands for the dispersed phase and CP stands for the continuous phase (thermoplastic matrix).

14. A method of producing a moulding material according to at least one of claims 1 to 13, **characterised in that** the polyamide, the copolymer and the compatibility promoter are mixed in a mixing assembly and cross-linking of the dispersed elastomer phase is carried out.

15. A method according to claim 14, **characterised in that** the mixing assembly is selected from rollers, multi-roll mills, dissolvers, internal mixers or mixing extruders.

16. A method according to claim 15, **characterised in that** a twin-screw extruder is used as a mixing assembly.

17. A method according to at least one of claims 14 to 16, **characterised in that** the cross-linking is effected by addition of a radical initiator together with the educt of the moulding material.

18. A method according to at least one of claims 14 to 16, **characterised in that** the cross-linking is effected by introducing energy-rich radiation during or after formation of the moulding material.

19. Use of the moulding material according to at least one of claims 1 to 13 for the production of moulded articles.

## Revendications

1. Matière à mouler, comprenant de 30 à 80 % en poids d'un polyamide, en tant que matrice thermoplastique, et d'une phase d'élastomère dispersée réticulée, liée à la matrice thermoplastique, contenant de 10 à 69 % en poids d'un copolymère d'éthylène ainsi que de 1 à 10 % en poids d'un promoteur de compatibilité, choisi parmi les composés obtenus par greffage d'acides mono- et/ou dicarboxyliques à insaturation $\alpha,\beta$-éthylénique ou de leurs dérivés sur un squelette polymère copolymère d'éthylène, dans chaque cas par rapport à la matière à mouler.

2. Matière à mouler selon la revendication 1, **caractérisée en ce que** de 1 à 7 % en poids, de façon particulièrement préférée de 1 à 5 % en poids, par rapport à la matière à mouler, de promoteur de compatibilité ont été utilisés.

3. Matière à mouler selon la revendication 1 ou 2, **caractérisée en ce que** le diamètre moyen de particule de la phase d'élastomère dispersée, réticulée, se situe dans la plage comprise entre 0,2 $\mu$m et 3 $\mu$m, de préférence entre 0,5 $\mu$m et 3 $\mu$m.

**4.** Matière à mouler selon au moins l'une des revendications 1 à 3, **caractérisée en ce que** la réticulation de la phase d'élastomère dispersée a été produite par voie radicalaire.

**5.** Matière à mouler selon la revendication 4, **caractérisée en ce que** la réticulation est effectuée in situ.

**6.** Matière à mouler selon la revendication 4 ou 5, **caractérisée en ce qu'**une réticulation radicalaire amorcée par un peroxyde a été effectuée.

**7.** Matière à mouler selon au moins l'une des revendications 1 à 4, **caractérisée en ce que** la réticulation de la phase d'élastomère dispersée s'effectue par application d'un rayonnement à haute énergie.

**8.** Matière à mouler selon au moins l'une des revendications 1 à 7, **caractérisée en ce que** le copolymère d'éthylène est un copolymère éthylène/acétate de vinyle (EVA).

**9.** Matière à mouler selon au moins l'une des revendications 1 à 8, **caractérisée en ce que** le produit de départ pour le greffage sur le squelette polymère est choisi parmi l'anhydride maléique (MAH), l'acide (méth)acrylique, le (méth) acrylate de glycidyle, le (méth)acrylate de butyle, le (méth)acrylate de méthyle.

**10.** Matière à mouler selon au moins l'une des revendications 1 à 9, **caractérisée en ce qu'**on utilise comme polyamide un polyamide partiellement cristallin.

**11.** Matière à mouler selon au moins l'une des revendications 1 à 10, **caractérisée en ce que** le polyamide est choisi parmi le PA 6, le PA 66, le PA 11, le PA 46, le PA 12, le PA 1212, le PA 1012, le PA 610, le PA 612, le PA 69, le PA 9T, le PA 6T, le PA 61, le PA 10T, le PA 12T, le PA 12I, des mélanges ou des copolymères de ceux-ci.

**12.** Matière à mouler selon au moins l'une des revendications 1 à 11, **caractérisée en ce qu'**elle contient en outre des additifs.

**13.** Matière à mouler selon l'une quelconque des revendications 1 à 12, **caractérisée en ce que** le rapport de concentrations en volume $\lambda_3 = \phi_{DP}/\phi_{CP}$ et le rapport de la viscosité complexe $\lambda_1 = \eta_{DP}/\eta_{CP}$ sont en la relation suivante : $\lambda_3/\lambda_1 < 1$, DP représentant la phase dispersée et CP la phase continue (matrice thermoplastique).

**14.** Procédé pour la préparation d'une matière à mouler selon au moins l'une des revendications 1 à 13, **caractérisé en ce qu'**on fait réagir dans un appareil de mélange le polyamide, le copolymère ainsi que le promoteur de compatibilité et on effectue une réticulation de la phase d'élastomère dispersée.

**15.** Procédé selon la revendication 14, **caractérisé en ce que** l'appareil de mélange est choisi parmi des mélangeurs à cylindres, des broyeurs à plusieurs cylindres, des dissolveurs, des mélangeurs internes et des extrudeuses de mélange.

**16.** Procédé selon la revendication 15, **caractérisé en ce qu'**on utilise comme appareil de mélange une extrudeuse double vis.

**17.** Procédé selon au moins l'une des revendications 14 à 16, **caractérisé en ce que** la réticulation d'effectue par addition d'un amorceur radicalaire avec le produit de départ de la matière à mouler.

**18.** Procédé selon au moins l'une des revendications 14 à 16, **caractérisé en ce que** la réticulation s'effectue par application d'un rayonnement à haute énergie, pendant ou après formation de la matière à mouler.

**19.** Utilisation de la matière à mouler selon au moins l'une des revendications 1 à 13, pour la fabrication de pièces moulées.

Fig. 1

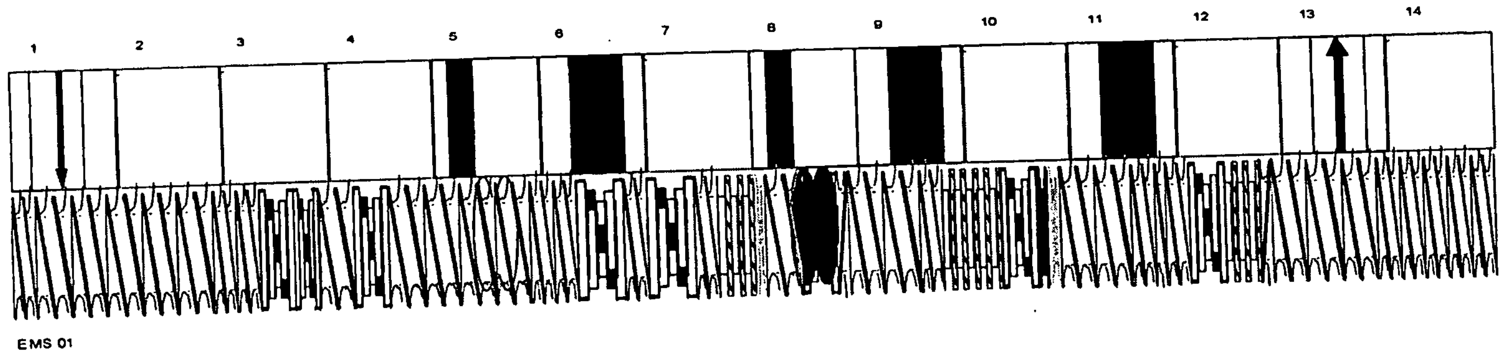


| Zylinder-Nummer | 1 | 2 | 3 | 4 | 5 | 6 | 7 | 8 | 9 | 10 | 11 | 12 | 13 | 14 | 15 |
|---|---|---|---|---|---|---|---|---|---|---|---|---|---|---|---|
| Temperatur-Profil (°C) für die Blend-Generierung | 120 | 180 | 190 | 190 | 190 | 190 | 190 | 190 | 190 | 190 | 190 | 190 | 200 | 200 | 200 |

36/36
5 x 54/54
2 x 36/36
KB45/5/54
KB45/5/36
54/54
KB45/5/54
4 x 54/54
2 x 36/36
KB45/5/72
36/36
KB45/5/72
36/36
3 x TME 22.5/18
KB45/5/18 LI
54/54
KB45/5/54
36/18 LI
2 x 54/54
36/36
5 x TME 22.5/18
KB45/5/54
KB45/5/18
KB45/5/18 LI
2 x 54/54
36/36
36/18
36/36
KB45/5/54
3 x TME 22.5/18
36/18 LI
3 x 54/54
5 x 36/36

Schneckenkonzept des Aufbereitungsextruder und die Gehäusesolltemperaturen für die Kopplungs- und Vernetzungsreaktionen (ZSK 40)

Fig. 2

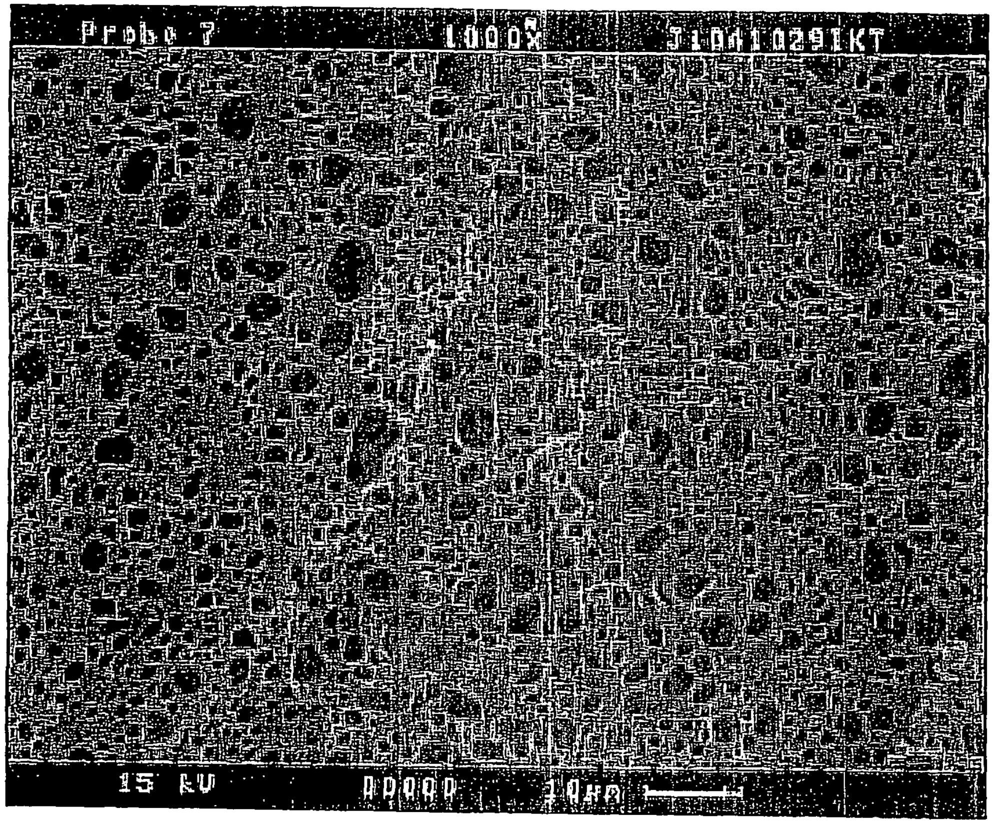


REM-Aufnahme eines PA12-EVA-Blends (GRILAMID L16A:LEVAMELT 500=50:50), das ohne Verträglichkeitsvermittler aber unter sonst gleichen Bedingungen wie Beispiel 4 hergestellt wurde.

Vergrösserung 1000x

Fig. 3

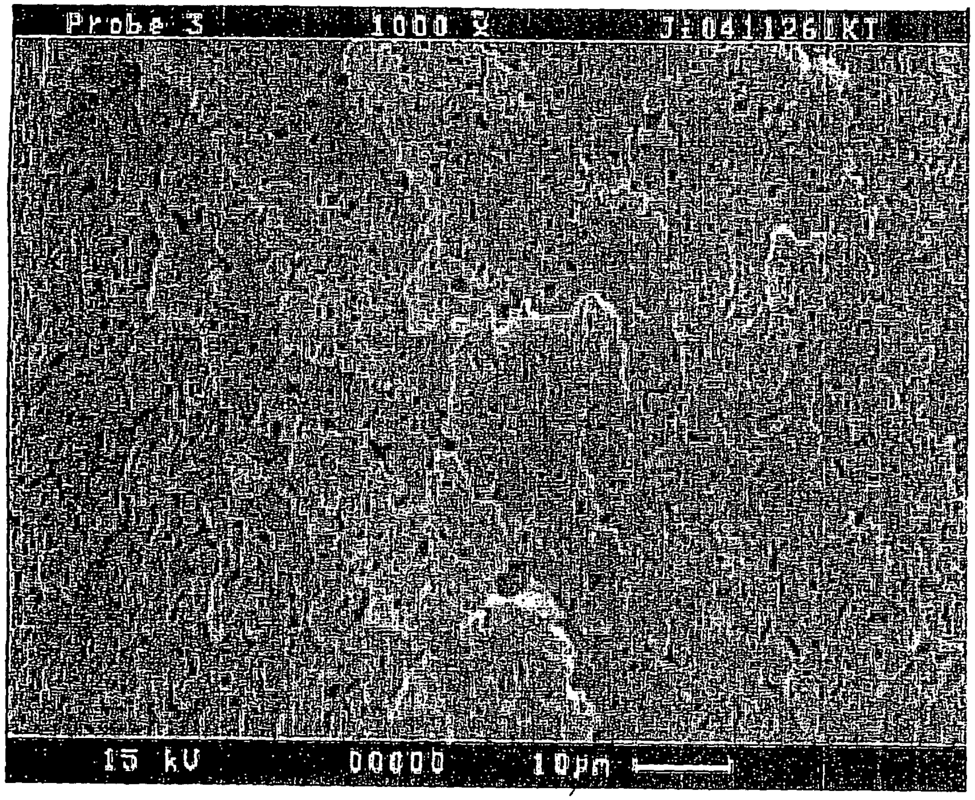


REM-Aufnahme des PA12-EVA-Blends (GRILAMID L16A:LEVAMELT 500=50:47) aus Beispiel 4.

Vergrösserung 1000x

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- DE 10345043 A1
- EP 0469693 A2


### In der Beschreibung aufgeführte Nicht-Patentliteratur


- Fließverhalten von Stoffen und Stoffgemischen. Hüthig & Wepf Verlag Basel, 1986